## Europäisches Patentamt

## European Patent Office

## Office européen des brevets

(19)

(11) Veröffentlichungsnummer: **0 006 093**
**A1**

(12) ## EUROPÄISCHE PATENTANMELDUNG

(21) Anmeldenummer: **78100181.3**

(22) Anmeldetag: **16.06.78**

(51) Int. Cl.³: **B 60 D 1/18**, B 29 H 19/02

(43) Veröffentlichungstag der Anmeldung: **09.01.80**
**Patentblatt 80/1**

(84) Benannte Vertragsstaaten: **CH DE FR GB NL SE**

(71) Anmelder: **Robert Schwind, Eifelstrasse 4, D-8752 Grosswelzheim (DE)**

(72) Erfinder: **Robert Schwind, Eifelstrasse 4, D-8752 Grosswelzheim (DE)**

(74) Vertreter: **Jaeger, Klaus, Dr.rer.nat. Dipl.-Chem. et al, Jaeger, Grams & Pontani Patentanwälte Bergstrasse 48 1/2, D-8035 München-Gauting (DE)**

(54) **Abschleppvorrichtung für Kraftfahrzeuge.**

(57) Bei einer Abschleppvorrichtung für Kraftfahrzeuge mit einem nicht starren Verbindungselement zwischen einem schleppenden und einem abgeschleppten Fahrzeug ist das Verbindungselement ein nach Abschleifen der außenliegenden Gummischicht der Lauffläche eines Kraftfahrzeug-Altreifens bis in den Bereich der äußersten Verstärkungslage der Lauffflächenkarkasse entlang der Lauffläche geschnittener offener Streifen. Die Enden dieses Streifens sind mit einem Haken oder einem hakenartigen Flachprofil verbunden oder im einfachsten Fall mit einer durchgehenden Bohrung versehen.

# JAEGER, GRAMS & PONTANI

**PATENTANWÄLTE**

BERGSTRASSE 48½ · 8035 MÜNCHEN-GAUTING

0006093

Robert Schwind, Großwelzheim                    RSD-4-EP

Abschleppvorrichtung für Kraftfahrzeuge

## B e s c h r e i b u n g

Die Erfindung betrifft eine Abschleppvorrichtung für Kraftfahrzeuge mit einem nicht starren Verbindungselement zwischen einem schleppenden und einem abgeschleppten Fahrzeug.

Nicht starre Abschleppvorrichtungen für Kraftfahrzeuge sind gebräuchlicherweise als Seile aus Kunststoffasern, Naturfasern oder als Stahlseile ausgebildet. Solche Abschleppseile sind durch das einzusetzende hochwertige Material teuer. Um den Verkaufs-

TELEPHON: (089) 8502030; 8574080; TELEX: 521777 isar d

preis gebräuchlicher Abschleppseile möglichst gering zu halten, werden diese häufig so schwach oder aus nicht ausreichend festem Material hergestellt, daß sie nicht selten eine Standzeit von nur wenigen Einsätzen haben.

Der Erfindung liegt die Aufgabe zugrunde, eine Abschleppvorrichtung für Kraftfahrzeuge nach Art der gebräuchlichen Abschleppseile zu schaffen, die bei verbesserter mechanischer Festigkeit preiswerter herstellbar ist.

Die Erfindung, wie sie in den Ansprüchen gekennzeichnet ist, löst diese Aufgabe durch einen Ersatz der gebräuchlichen Abschleppseile durch einen aus der Laufflächenkarkasse eines Kraftfahrzeug-Altreifens geschnittenen Streifen.

Als Ausgangsmaterial für die Herstellung dieser als Abschleppvorrichtung dienenden Streifen werden vorzugsweise Altreifen mit Kunststoff- oder Leinwandkarkasse und einem Durchmesser von ca. 1 m verwendet. Solche Altreifen fallen mit abgeschliffener oder abgeschälter Gummilauffläche in großen Mengen bei den Altgummiverwertern an, die den von den Verstärkungslagen durchsetzten Karkassenteil der Altreifen nicht aufarbeiten können.

Aus solchen abgeschliffenen Altreifen werden die Abschleppstreifen zunächst als in sich geschlossene Ringe entlang der Lauffläche geschnitten. Diese Ringe werden dann durch einen Querschnitt zu den Streifen geöffnet. Die Querschnittfläche der als Abschleppvorrichtung verwendeten Streifen liegt vorzugsweise im Bereich von ca. 1 bis 5 cm².

Die Abschleppvorrichtung der Erfindung weist zunächst den Vorteil auf, daß sie gegenüber den gebräuchlichen Abschleppseilen bei zumindest vergleichbarer mechanischer Festigkeit, meist überlegener mechanischer Festigkeit, um ein Vielfaches preisgünstiger herstellbar ist. Ein weiterer Vorteil der Abschleppvorrichtung der Erfindung liegt darin, daß der Abschleppstreifen eine deutlich höhere Elastizität als die gebräuchlichen Abschleppseile aufweist. Dieser Vorteil wirkt sich besonders positiv beim Abschleppen durch weniger geübte Fahrer aus. Ein dritter, wesentlicher Vorteil der Abschleppvorrichtung ist schließlich darin zu sehen, daß sie ein bislang als unverwendbar verworfenes in aller Welt in großen Mengen anfallendes an sich hochwertiges Abfallprodukt wieder einer sinnvollen technischen Verwertung zuführt.

An den Enden der Abschleppstreifen können prinzipiell beliebige an sich bekannte Vorrichtungen zur Befestigung der Abschleppvorrichtung an dem schleppenden und geschleppten Fahrzeug vorgesehen sein. Im einfachsten Fall ist eine solche Befestigungsvorrichtung eine senkrecht durch die Verstärkungslagen des Streifens hindurchgehende beidseitig offene Bohrung, die auf einen an den Fahrzeugen vorgesehenen offenen Haken aufhängbar ist. Bei geschlossenem Haken am Kraftfahrzeug kann die Verbindung beispielsweise durch einen S-förmigen Haken erfolgen, der durch die Bohrung im Abschleppstreifen greift. Alternativ kann als Verbindungsvorrichtung ein aus einem Flachstahl gestanztes hakenförmiges Element verwendet werden, das beispielsweise durch Aufnieten am Abschleppstreifen befestigt ist. Ein solches Profil kann auch nach Schlitzen des Endes des Abschleppstreifens in der Ebene der Verstärkungslagen mittig im Abschleppstreifen mit diesem vernietet werden.

Vorzugsweise wird als Befestigungsvorrichtung an den Enden des Abschleppstreifens ein aus Rundstahl gefertigter Abschlepphaken verwendet, der fest mit dem Streifen verbunden ist. Dieser Abschlepphaken hat im wesentlichen die Form der Ziffer "8", wobei die beiden Schlaufen jedoch nicht in einer Ebene liegen, sondern senkrecht zueinander stehen. In einer dieser Schlaufen ist ein Ende des Abschleppstreifens in der Weise befestigt, daß der Rundstahl senkrecht zu den Verstärkungslagen durch eine entsprechende Bohrung im Abschleppstreifen greift. Diese Schlaufe des Hakens ist fest geschlossen und kann gegebenenfalls auch flach gedrückt sein. Die gegenüberliegende "äußere" Schlaufe des Rundstahlhakens, die mit ihrer Hauptebene senkrecht zur Hauptebene der inneren Schlaufe steht, ist auf ihrer Innenseite, also kurz vor dem Kreuzungspunkt des 8-förmigen Hakens, geöffnet. Diese Öffnung ist so groß bemessen, daß der Streifen durch diese Öffnung hindurch bequem seitlich in die außenliegende Schlaufe des 8-förmigen Rundstahlhakens einlegbar ist. Der so offene äußere Haken kann dadurch auch in einen geschlossenen Haken am Kraftfahrzeug eingehängt werden. Ist jedoch am Kraftfahrzeug kein Abschlepphaken vorgesehen, so kann der Abschleppstreifen beispielsweise um eine Achse oder um eine Stoßstangenhalterung oder eine Stoßstange des Kraftfahrzeugs herumgelegt werden, wobei der offene äußere Teil des 8-förmigen Hakens dann über den zum anderen Kraftfahrzeug laufenden Streifen durch seitliches Einführen gehängt wird. Dadurch wird eine sich selbst elastisch festziehende Verbindung hergestellt, die nach Bedarf wieder leicht zu öffnen ist.

0006093

Patentansprüche

1. Abschleppvorrichtung für Kraftfahrzeuge mit einem nicht starren Verbindungselement zwischen einem schleppenden und einem abgeschleppten Fahrzeug, dadurch gekennzeichnet, daß das Verbindungselement ein nach Abschleifen oder Abschälen der außenliegenden Gummischicht bis in den Bereich der äußersten Verstärkungslage aus und entlang der Lauffläche eines Kraftfahrzeug-Altreifens geschnittener und durch einen Querschnitt geöffneter Streifen ist.

- 2 -

2. Abschleppvorrichtung nach Anspruch 1,
dadurch   g e k e n n z e i c h n e t ,
daß an mindestens einem Ende des Verbindungselementes
ein aus Rundstahl gefertigter, im wesentlichen
8-förmiger Haken befestigt ist, dessen beide Schlaufenebenen senkrecht zueinander stehen, wobei der
eine Schlaufenebene definierende Rundstahlabschnitt
senkrecht zu den Verstärkungslagen durch den Endabschnitt des Streifens greift, während die gegenüberliegende äußere Schlaufe im Bereich des Kreuzungspunktes des Hakens soweit geöffnet ist, daß ein
seitliches Einführen des Streifens in den Innenbereich der äußeren Schlaufe des Hakens mühelos
erfolgen kann.

3. Verwendung von Kraftfahrzeug-Altreifen mit abgeschliffener oder abgeschälter Gummilauffläche zur
Herstellung von Abschleppvorrichtungen für Kraftfahrzeuge durch Schneiden offener Streifen aus
und entlang der Lauffläche.

Europäisches
Patentamt

**EUROPÄISCHER RECHERCHENBERICHT**

Nummer der Anmeldung

0006093

EP 78 10 0181

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | US - A - 1 652 442 (JENSEN) <br> * Seite 1, Zeilen 38-103; Zeichnungen 1-4 * | 1 |
| | -- | |
| | US - A - 3 418 803 (MARTIN) <br> * Spalte 2, Zeile 29 bis Spalte 4, Zeile 40; Zeichnungen 1-7 * | 1,3 |
| | -- | |
| | US - A - 3 701 296 (SNOW) <br> * Spalte 1, Zeilen 5-15 * | 1,3 |
| | -- | |
| | GB - A - 767 234 (JAUSLIN) <br> * Seite 1, Zeile 44 bis Seite 2, Zeile 78; Zeichnungen 1-7 * | 3 |
| | -- | |
| | DE - B - 1 143 631 (BARTSCH) <br> * Spalte 1, Zeile 1 bis Spalte 2, Zeile 30; Figuren 1-3 * | 1,3 |
| | -- | |
| | US - A - 2 478 184 (ELLIOT) <br> * Figuren * | 2 |
| | -- | |
| | US - A - 1 418 958 (MOORE) <br> * Figuren * | 2 |
| | -- | |
| A | US - A - 2 751 218 (SCHWELM) <br> * Spalte 1, Zeile 66 bis Spalte 2, Zeile 60; Figuren 1,2 * | 1 |
| | -- | |
| | ./. | |

### KLASSIFIKATION DER ANMELDUNG (Int.Cl.³)

B 60 D 1/18
B 29 H 19/02

### RECHERCHIERTE SACHGEBIETE (Int. Cl.³)

B 60 D 1/16
B 60 D 1/18
B 29 H 19/00
B 29 H 19/04

### KATEGORIE DER GENANNTEN DOKUMENTE

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 11-09-1978 | ESPEEL |

EPA form 1503.1 06.78

| | EINSCHLÄGIGE DOKUMENTE | | KLASSIFIKATION DER ANMELDUNG (Int.Cl.³) |
|---|---|---|---|
| Kategorie | Kennzeichnung des Dokuments mit Angabe, soweit erforderlich, der maßgeblichen Teile | betrifft Anspruch | |
| A | GUMMI ASBEST KUNSTSTOFFE, vol. 29, Januar 1976, Stuttgart W.LUERS "Beseitigung und Verwertung von Altreifen<br><br>* Seite 36-39; Seite 36 bis Seite 37, Absatz 1 *<br><br>--- | 1 | |
| A | DE - A - 2 514 830 (EBERWEIN)<br><br>* Seite 1, Absatz1 bis Seite 12, Absatz 2; Figuren 1-9 *<br><br>--- | 1 | |
| | | | RECHERCHIERTE SACHGEBIETE (Int. Cl.³) |
| A | DE - B - 1 034 419 (PIODI)<br><br>* Spalte 1, Zeile 1 bis Spalte 3, Zeile 15; Figuren 1-4 *<br><br>----- | 1 | |